# EUROPEAN PATENT APPLICATION

(11) **EP 4 694 018 A2**
(43) Date of publication of application: **11.02.2026**
(21) Application number: 25194533.3
(22) Date of filing: 07.08.2025
(51) Int. Cl.: H04L 5/00, H04L 27/26

(54) **METHOD OF COMMUNICATION OPERATION AND USER EQUIPMENT**

(30) Priority: 07.08.2024 US 202463680067 P
(71) Applicant: Industrial Technology Research Institute, 310401 Hsinchu (TW)
(72) Inventor: Hsieh, Chia-Wen, 600 Chiayi City (TW); Lee, Chien-Min, 324 Taoyuan City (TW); Lo, Li-Chung, 407 Taichung City (TW)
(74) Representative: Becker Kurig & Partner Patentanwälte mbB

(57) **Abstract**

The embodiments of the disclosure provide a method of communication operation and a UE (600, 1610, 1620). The method includes: receiving (S710) a first signaling for indicating a first information related to a first set of Synchronization Signal/PBCH Block (SSB); and receiving (S720) a second signaling for indicating a second information related to a second set of SSB.

## Description

### BACKGROUND OF THE INVENTION

### 1. Field of the Invention

The disclosure generally relates to a communication mechanism, in particular, to a method of communication operation and a user equipment (UE).

### 2. Description of Related Art

In the 5G New Radio (NR) system, Synchronization Signal/PBCH (Physical Broadcast Channel) Block (SSB) bursts are introduced to support beam sweeping. The SSB burst is implemented via Time Division Multiplexing (TDM) to change beam direction and is transmitted as a burst in the downlink. The SSB burst is limited to a 5 ms window and is periodically transmitted with a periodicity of 5 ms, 10 ms, 20 ms, 40 ms, 80 ms, or 160 ms, with 20 ms being the default. The SSB transmission pattern per SSB burst is configured using a radio resource control (RRC) parameter named ssb-PositionsInBurst.

In ssb-PositionsInBurst, the first/leftmost bit corresponds to SS/PBCH block index 0, the second bit corresponds to SS/PBCH block index 1, and so on. Value 0 in the bitmap indicates that the corresponding SS/PBCH block is not transmitted while value 1 indicates that the corresponding SS/PBCH block is transmitted. The network configures the same pattern in this field as in the corresponding field in ServingCellConfigCommonSIB.

The SSB transmission pattern is typically configured using short, medium, or long bitmaps, which support up to 4, 8, and 64 beams per SSB burst, respectively.

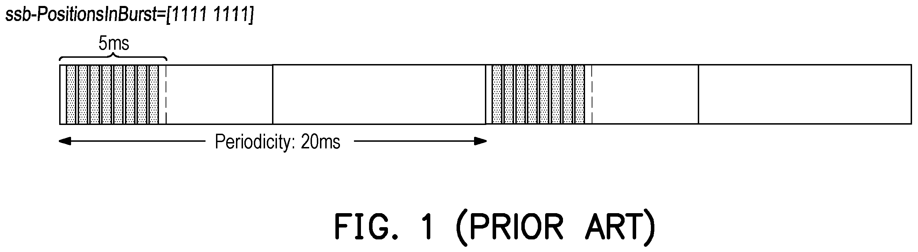

See FIG. 1, which shows a schematic diagram of SSB bursts. In FIG. 1, the ssb-PositionsInBurst may be, for example, [1111 1111], and the SSB transmission pattern (i.e., the SSB bitmap) may be corresponding to the medium bitmap, which indicates that there are up to 8 beams per SSB burst.

However, to ensure continuous synchronization coverage, the current system configuration keeps SSB transmissions always-on, even under energy-saving configurations such as Network Energy Saving (NES) defined in 3GPP Release 18. This "always-on" approach can lead to unnecessary energy consumption in certain scenarios.

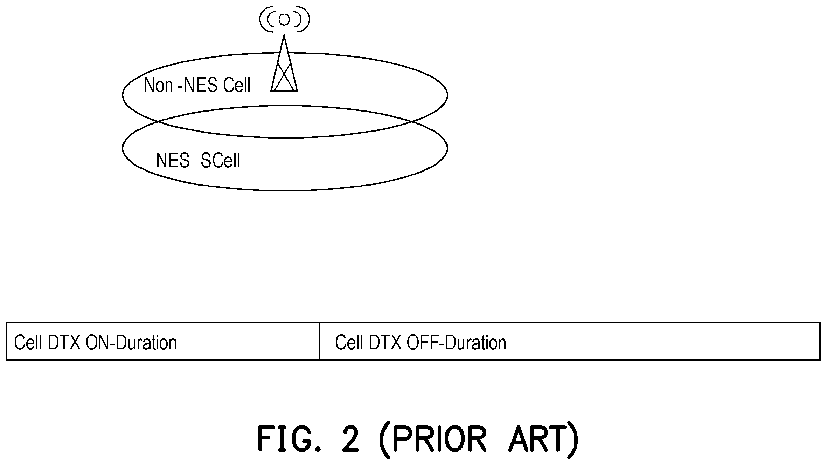

See FIG. 2, which shows a schematic diagram of the NES concept.

As shown in FIG. 2, for Rel-18 NES, a UE may be configured with Non-NES cell and at least one NES Cell, wherein NES Cell supports NES operation, and the Non-NES cell may be a Primary Cell (PCell) or a Primary SCell (PSCell).

In Release 18, Cell-DTX (discontinuous transmission) is introduced to improve network energy efficiency, allowing scheduled inactivity during certain time periods to save power.

For example, a UE may receive physical downlink shared channel (PDSCH) in Cell-DTX ON duration, and the UE may not receive PDSCH in Cell-DTX OFF duration.

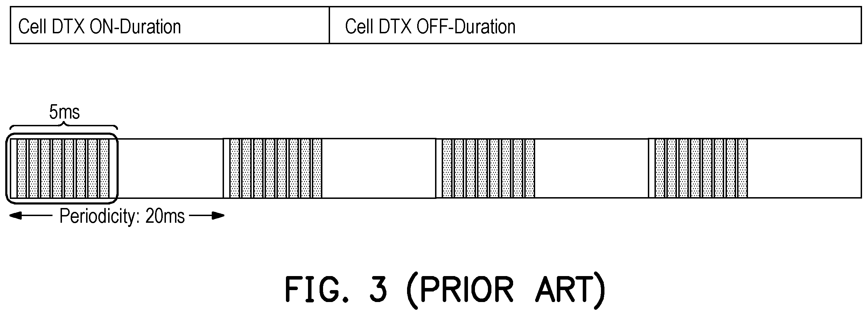

See FIG. 3, which shows a schematic diagram of the relationship between the DTX durations and the SSB transmissions.

In FIG. 3, the UE may receive PDSCH in Cell-DTX ON duration, and the UE may not receive PDSCH in Cell-DTX OFF duration.

As can be seen from FIG. 3, the SSB continues to be transmitted even during the OFF durations of Cell-DTX, leading to potential inefficiencies. For example, the energy consumption may be a severe problem due to always-on SSB. In addition, the network configures the same pattern in this field as in the corresponding field in ServingCellConfigCommonSIB.

Moreover, the association between SSB and Channel State Information - Reference Signal (CSI-RS), such as beam pairing and quasi co-location (QCL), also affects CSI measurement and reporting overhead, especially when multiple SSBs and CSI-RSs are involved in the configuration.

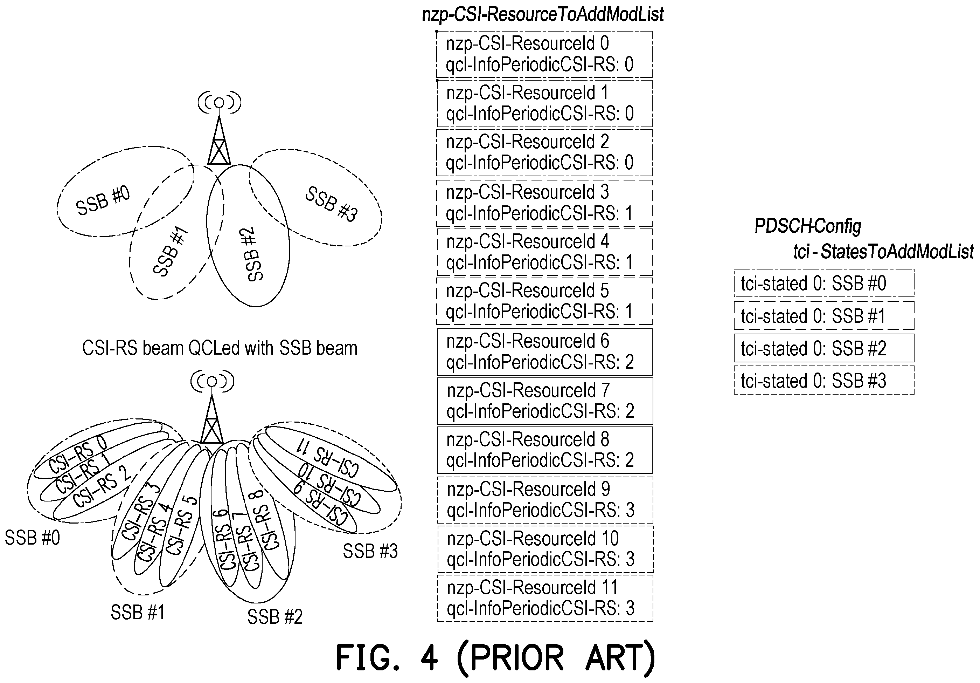

See FIG. 4, which shows a schematic diagram of SSB beams and CSI-RS beams having QCL relationships therebetween.

In FIG. 4, the network node (e.g., a base station) may transmit 4 SSB beams represented by SSB#0 to SSB#3 and 12 CSI-RS beams represented by CSI-RS 0 to CSI-RS 11.

As shown in FIG. 4, there is a QCL relationship between SSB#0 and CSI-RS 0 to CSI-RS 2, a QCL relationship between SSB#1 and CSI-RS 3 to CSI-RS 5, a QCL relationship between SSB#2 and CSI-RS 6 to CSI-RS 8, and a QCL relationship between SSB#3 and CSI-RS 9 to CSI-RS 11.

In this case, the QCL relationships between the SSB beams and the CSI-RS beams can be indicated by the signaling named nzp-CSI-ResourceToAddModList as shown in FIG. 4.

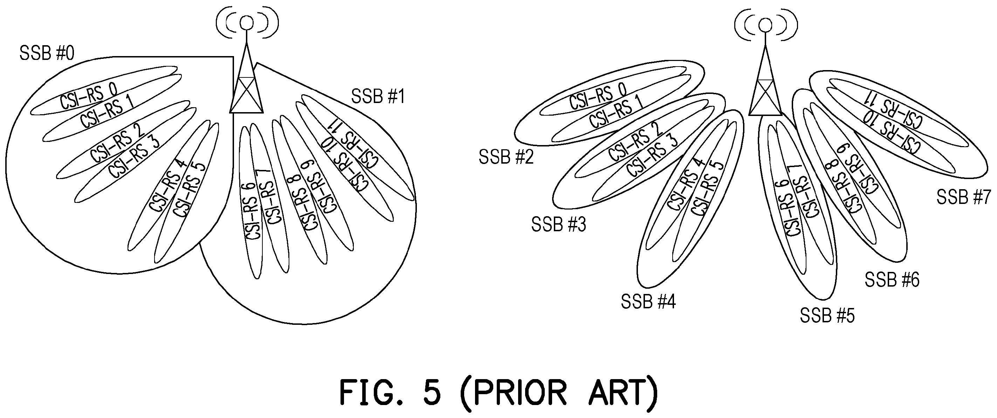

See FIG. 5, which shows a schematic diagram of SSB for cell planning.

In FIG. 5, it shows that the number and configuration of CSI-RS beams quasi co-located (QCLed) with each SSB beam directly affect the efficiency of beam planning and UE measurement workload.

For example, as illustrated on the left side of FIG. 5, when SSB #0 is selected, the UE monitors CSI-RS 0 through CSI-RS 5, offering more CSI-RS candidates but resulting in higher CSI reporting overhead.

In contrast, as illustrated on the right side of FIG. 5, selecting SSB #2 requires the UE to monitor only CSI-RS 0 and CSI-RS 1, leading to fewer CSI-RS candidates and reduced reporting overhead.

However, as mentioned in the above, the always-on periodic SSB transmission may consume unnecessary network energy. In addition, the semi-static configured SSB transmission pattern may not reflect its real-time spatial domain characteristics (beam).

### SUMMARY OF THE INVENTION

Accordingly, the disclosure is directed to a method of communication operation and a UE, which can be used to solve the above technical problem.

The embodiments of the disclosure provide a method of communication operation performed by a UE. The method includes: receiving a first signaling for indicating a first information related to a first set of Synchronization Signal/PBCH Block (SSB); and receiving a second signaling for indicating a second information related to a second set of SSB.

The embodiments of the disclosure provide a UE including a transceiver and a processor. The processor is coupled to the transceiver and configured to perform: receiving a first signaling for indicating a first information related to a first set of Synchronization Signal/PBCH Block (SSB); and receiving a second signaling for indicating a second information related to a second set of SSB.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 shows a schematic diagram of SSB bursts.
FIG. 2 shows a schematic diagram of the NES concept.
FIG. 3 shows a schematic diagram of the relationship between the Cell DTX durations and the SSB transmissions.
FIG. 4 shows a schematic diagram of SSB beams and CSI-RS beams having QCL relationships therebetween.
FIG. 5 shows a schematic diagram of SSB for cell planning.
FIG. 6 shows a functional block diagram of UE according to an embodiment of the disclosure.
FIG. 7 shows a flow chart of the method of communication operation according to an embodiment of the disclosure.
FIG. 8A shows a schematic diagram of the beam coverage of a first set of SSB according to an embodiment of the disclosure.
FIG. 8B shows a schematic diagram of the pattern of the first set of SSB according to FIG. 8A.
FIG. 8C shows a schematic diagram of the CSI-RSs having QCL relationships with the first set of SSB according to FIG. 8A.
FIG. 8D shows a schematic diagram of the operation of legacy UE according to FIG. 8A to FIG. 8C.
FIG. 9 shows a schematic diagram of Cell-DTX mechanism according to an embodiment of the disclosure.
FIG. 10 shows a schematic diagram of different SSB transmission patterns in different periods according to FIG. 9.
FIG. 11A shows a schematic diagram of the UE behavior in the first period according to FIG. 10.
FIG. 11B shows a schematic diagram of performing CSI measurement and report in the first period according to FIG. 11A.
FIG. 12 shows a schematic diagram of the UE behavior in the second period according to FIG. 10.
FIG. 13 shows a schematic diagram of no SSB transmission in the second period according to FIG. 10.
FIG. 14 shows a schematic diagram of the UE behavior in the first period and second period according to FIG. 13.
FIG. 15A shows a schematic diagram of configuring SSB transmission patterns in response to traffic loads according to an embodiment of the disclosure.
FIG. 15B shows a schematic diagram of performing CSI measurement and report in the first period according to FIG. 15A.
FIG. 16A shows a schematic diagram of the UE behavior in the first period according to FIG. 15A.
FIG. 16B shows a schematic diagram of the UE behavior in the second period according to FIG. 15A.
FIG. 17A shows a schematic diagram of configuring SSB transmission patterns in response to traffic loads according to FIG. 15A.
FIG. 17B shows a schematic diagram of the UE behavior in the first period according to FIG. 17A.
FIG. 18 shows a schematic diagram of switching between transmitting the first set of SSB in the first period and the second set of SSB in the second period according to an embodiment of the disclosure.
FIG. 19 shows a schematic diagram of different options for determining the activation and/or deactivation of the first set of SSB in the first period according to FIG. 18.
FIG. 20 shows a schematic diagram of UE behavior according to FIG. 18 and FIG. 19.
FIG. 21 shows a schematic diagram of the first periodicity used in the first period and the second period used in the second period according to an embodiment of the disclosure.
FIG. 22 shows a schematic of the mechanism for transmitting the CSI reports according to FIG. 21.
FIG. 23 shows a schematic diagram of using different patterns to configure the SSB monitoring and CSI measurement/report according to an embodiment of the disclosure.
FIG. 24 shows another schematic diagram of using different patterns to configure the SSB monitoring and CSI measurement/report according to an embodiment of the disclosure.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

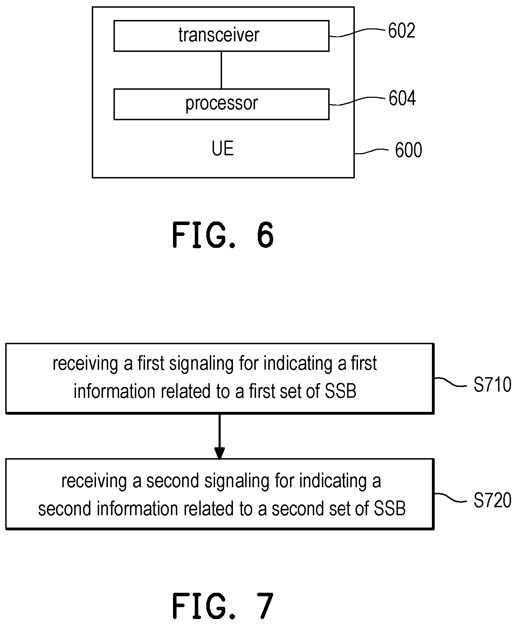

See FIG. 6, which shows a functional block diagram of UE according to an embodiment of the disclosure.

In the embodiments of the disclosure, the UE 600 may be implemented as various types of communication devices. These include smartphones, tablets with cellular connectivity, laptops equipped with 5G modems, and Fixed Wireless Access (FWA) devices. Additionally, UEs may take the form of Internet of Things (IoT) terminals such as smart meters or industrial sensors, vehicle-mounted communication units used in connected or autonomous vehicles, customer premises equipment (CPE), AR/VR headsets with mobile broadband capability, and drones or unmanned aerial vehicles (UAVs) with integrated 5G modules. These devices typically incorporate the necessary protocol stack, physical layer components, and radio interfaces to communicate with 5G network infrastructure.

In FIG. 6, the UE 600 includes a transceiver 602 and a processor 604. The transceiver 602 may be configured for transmitting and receiving signals from other devices within a coverage area thereof. The transceiver 602 is capable of performing analog to digital signal conversion (ADC), digital to analogue signal conversion (DAC), modulation, demodulation, signal amplification, low-pass filtering, and bandpass filtering. For example, the transceiver 602 is configured to provide information on a received signal to the processor 604, modulating data received from the processor 604 into a modulated signal, and transmitting the modulated signal to other devices.

In some embodiments, the UE 600 may further include other elements, such as an antenna module for implementing the aforementioned functions of the transceiver 602 and the processor 604.

The processor 604 may be coupled with the transceiver 602, and the processor 604 may be, for example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like.

In the embodiments of the disclosure, the transmissions/receptions of the UE 600 may be performed by the processor 604 of the UE 600 controlling the transceiver 602 of the UE 600.

In the embodiments of the disclosure, the processor 604 may be configured to perform the method of communication operation proposed by the disclosure, and detailed discussions would be provided in the following.

See FIG. 7, which shows a flow chart of the method of communication operation according to an embodiment of the disclosure.

In step S710, the processor 604 controls the transceiver 602 to receive a first signaling for indicating a first information related to a first set of SSB.

In this embodiment, the first signaling may be a Radio Resource Control (RRC) signaling, a Medium Access Control-Control Element (MAC-CE) signaling, or a downlink control information (DCI).

The first information may include, for example, at least one of: a first configuration, a first periodicity, a first bitmap, a first center frequency, a first frequency offset, or a first Transmission Configuration Indication (TCI).

More specifically, the first configuration may include one or more of the first periodicity, the first bitmap, the first center frequency, or the first frequency offset.

In one embodiment, the first set of SSB may include a plurality of first SSBs, the first bitmap may include a plurality of first bits respectively corresponding to the plurality of first SSBs in the first set of SSB. In this case, a first bit value of one of the plurality of first bits indicates that the corresponding first SSB in the first set of SSB is transmitted, and a second bit value of the one of the plurality of first bits indicates that the corresponding first SSB in the first set of SSB is not transmitted.

For example, the UE 600 may receive an first signaling carrying the first bitmap that indicates the transmission status of each SSB in the first set. The first bitmap may comprise a plurality of first bits, each corresponding to one of the first SSBs. A bit value of "1" may indicate that the corresponding first SSB is transmitted, while a bit value of "0" may indicate that the corresponding first SSB is not transmitted.

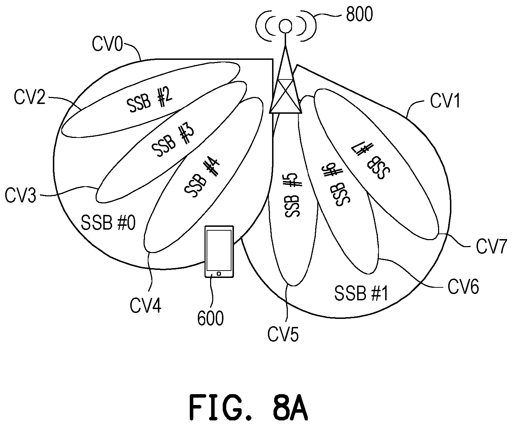

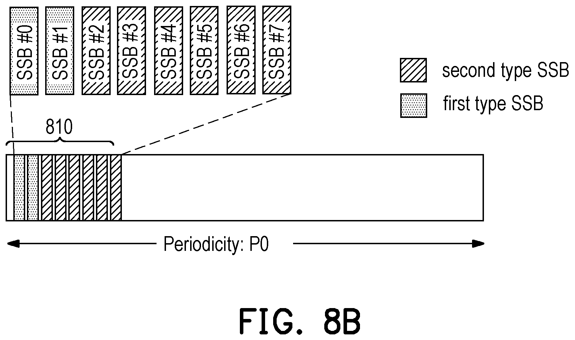

See FIG. 8A and FIG. 8B, wherein FIG. 8A shows a schematic diagram of the beam coverage of a first set of SSB according to an embodiment of the disclosure, and FIG. 8B shows a schematic diagram of the pattern of the first set of SSB according to FIG. 8A.

In the embodiment, the network node 800 (which may be a gNB) may transmit the first set of SSB, wherein the first set of SSB may form a first SSB burst 810.

In one embodiment, the first information carried by the first signaling indicates the first bitmap of the first SSB burst 810.

In one embodiment, the first set of SSB may include a plurality of first type SSBs and/or a plurality of second type SSBs.

In one embodiment, the second type SSBs may be divided into a plurality of subsets respectively corresponding to the plurality of first type SSBs, each of the plurality of first type SSBs has a first beam coverage, each of the plurality of second type SSBs has a second beam coverage, and the first beam coverage of one of the plurality of first type SSBs covers the second beam coverage of each of the plurality of second type SSBs in the corresponding subset.

For better understanding, FIG. 8A and FIG. 8B may be used as an example, but the disclosure is not limited thereto.

In FIG. 8A and FIG. 8B, the first set of SSB may exemplarily include SSB#0 to SSB#7, wherein SSB#0 and SSB#1 may be the first type SSBs, and SSB#2 to SSB#7 may be the second type SSBs.

In the embodiment, SSB#2 to SSB#7 may be divided into two subsets, wherein a first subset of the subsets may include SSB#2 to SSB#4 and correspond to SSB#0, and a second subset of the subsets may include SSB#5 to SSB#7 and correspond to SSB#1.

In addition, SSB#0 and SSB#1 may respectively has a first beam coverages CV0 and CV1, and SSB#2 to SSB#7 may respectively has a second beam coverage CV2 to CV7.

In FIG. 8A, the first beam coverage CV0 of SSB#0 covers the second beam coverage CV2 to CV4 of SSB#2 to SSB#4. In this case, the SSB#0 may be understood as having a QCL relationship with SSB#2 to SSB#4.

In addition, the first beam coverage CV1 of SSB#1 covers the second beam coverage CV5 to CV7 of SSB#5 to SSB#7. In this case, the SSB#1 may be understood as having a QCL relationship with SSB#5 to SSB#7.

In the embodiments of the disclosure, the UE 600 may be a specific type of UE that supports the NES function, and hence may be referred to as an NES UE. In contrast, those UE that do not support the NES function may be referred to as a legacy UE, but the disclosure is not limited thereto.

In the embodiments of the disclosure, the NES UE may be informed the QCL relationship between the first type SSBs and the second type SSBs. On the other hand, the legacy UE may not know the QCL relationship between the first type SSBs and the second type SSBs.

In FIG. 8A and FIG. 8B, the network node 800 may transmit the corresponding first signaling (e.g., the MAC-CE signaling) to the UE 600, and the first signaling may accordingly indicate the first information of the first set of SSB, such as the first configuration, the first periodicity (e.g., P0), the first bitmap, the first center frequency, the first frequency offset, or the first TCI.

In addition, since the network node 800 transmits SSB#0 to SSB7, the first bitmap may be, for example, [1111 1111].

In this case, the UE 600 (e.g., the NES UE) may communicate with the NES cell via either the first type SSBs or the second type SSBs, and report the selection result of the SSBs to the network node 800.

In one embodiment, the UE 600 monitors the plurality of first type SSBs and/or the plurality of second type SSBs for at least one of PDCCH detection, BFD, BFR, or RLM.

In one embodiment, if the UE 600 communicates with the NES cell via the first type SSBs (e.g., SSB#0 or SSB#1), the UE 600 may follow legacy behavior. That is, the UE 600 may communicate with the NES Cell regularly.

In another embodiment, if the UE 600 communicates with the NES cell via the second type SSBs (e.g., one of SSB#2 to SSB#7), the UE 600 may be aware that the UE 600 may fallback to the first type SSBs (e.g., SSB #0 or SSB#1) if needed.

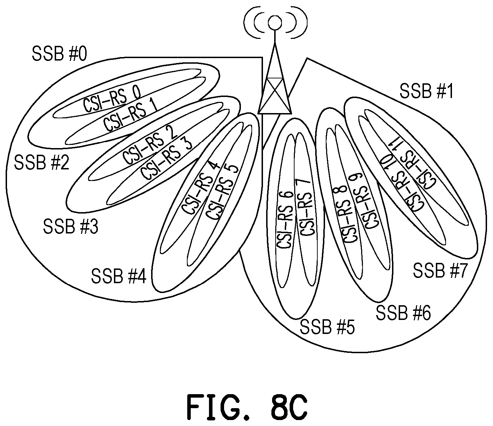

See FIG. 8C, which shows a schematic diagram of the CSI-RSs having QCL relationships with the first set of SSB according to FIG. 8A.

In FIG. 8C, SSB#2 may have a QCL relationship with CSI-RS 0 and CSI-RS 1; SSB#3 may have a QCL relationship with CSI-RS 2 and CSI-RS 3; SSB#4 may have a QCL relationship with CSI-RS 4 and CSI-RS 5; SSB#5 may have a QCL relationship with CSI-RS 6 and CSI-RS 7; SSB#6 may have a QCL relationship with CSI-RS 8 and CSI-RS 9; and SSB#7 may have a QCL relationship with CSI-RS 10 and CSI-RS 11.

In the scenario of FIG. 8A to FIG. 8C, the UE 600 may perform CSI measurement and report for CSI-RS 0 to CSI-RS 11, but the disclosure is not limited thereto.

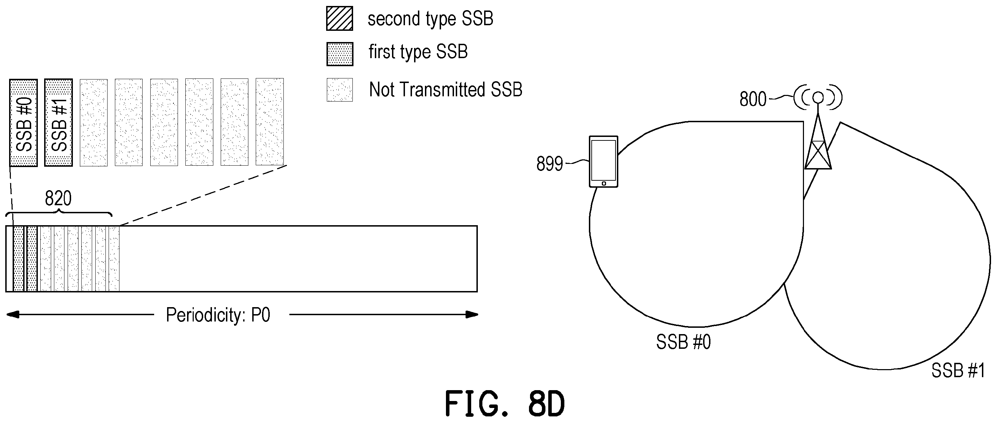

See FIG. 8D, which shows a schematic diagram of the operation of legacy UE according to FIG. 8A to FIG. 8C.

In FIG. 8D, the legacy UE 899 does not know the above QCL relationship between the first type SSBs and the second type SSBs.

In the embodiment, legacy UE 899 may be configured with SSB Transmission Pattern: mediumBitmap {ssb-PositionsInBurst [1100 0000]} with periodicity P0. In this case, the legacy UE 899 may communicate with the NES cell via one of the first type SSBs (e.g., SSB #0 or SSB#1), and report its selection result to the network node 800, but the disclosure is not limited thereto.

In one embodiment, if the SSB transmission pattern is unknown to the legacy UE 899, the legacy UE 899 may perform blind detection of the SSB for initial access. The legacy UE 899 then communicates with the NEC cell via one of the detected SSBs and reports its selection result to the network node 800.

However, the legacy UE 899 may not initially know whether the selected SSB corresponds to the first type SSBs or the second type SSBs.

If the legacy UE 899 communicates with the NES Cell using the first type SSBs, the legacy UE 899 may continue to follow legacy behavior. Conversely, if the legacy UE 899 accesses the NES Cell using the second type SSBs, the legacy UE 899 may be informed to switch from the second type SSBs to the first type SSBs. This notification may be provided by indicating the TCI state of a Control Resource Set (CORESET), such as CORESET #0, via RRC signaling, MAC-CE, and/or Downlink Control Information (DCI), but the disclosure is not limited thereto.

Referring back to FIG. 7, in step S720, the processor 604 controls the transceiver 602 to receive a second signaling for indicating a second information related to a second set of SSB.

In one embodiment, the second signaling may be a DCI signaling, a MAC-CE, or a RRC.

In one embodiment, the second information may include at least one of: a second configuration, a second periodicity, a second bitmap, a second center frequency, a second frequency offset, a second TCI, or QCL information.

In one embodiment, the second configuration may include one or more of the second periodicity, the second bitmap, the second center frequency, or the second frequency offset.

In one embodiment, the second set of SSB may include a plurality of second SSBs, the second bitmap may include a plurality of second bits respectively corresponding to the plurality of second SSBs in the second set of SSB. In this case, a first bit value of one of the plurality of second bits indicates that the corresponding second SSB in the second set of SSB is transmitted, and a second bit value of the one of the plurality of second bits indicates that the corresponding second SSB in the second set of SSB is not transmitted.

For example, the UE 600 may receive the second signaling (e.g., a RRC signaling) carrying the second bitmap indicating the SSB transmission state for the second set of SSBs. The second bitmap may comprise a plurality of second bits, each corresponding to one of the second SSBs. A bit value of "1" may indicate that the corresponding second SSB is transmitted, while a bit value of "0" may indicate that the corresponding second SSB is not transmitted.

In the embodiments of the disclosure, the second set of SSB may include the plurality of first type SSBs. For example, the second set of SSB may include SSB#0 and SSB#1 in FIG. 8D, and the scenario in FIG. 8D may be used as an example for better understanding, but the disclosure is not limited thereto.

In FIG. 8D, the second set of SSB (e.g., SSB#0 and SSB#1) may form a second SSB burst 820.

In one embodiment, the second information carried by the second signaling indicates the second bitmap of the second SSB burst 820.

In one embodiment, if the second periodicity is not provided or indicated, a periodicity of the second set of SSB may be set to a default period or the first periodicity of the first set of SSB.

In one embodiment, if the second bitmap is not provided or indicated, the second bitmap of the second set of SSB may be set to a default bitmap or the first bitmap of the first set of SSB.

In one embodiment, if the second center frequency is not provided or indicated, the center frequency of the second set of SSB may be set to a default center frequency or the first center frequency of the first set of SSB.

In one embodiment, if the second frequency offset is not provided or indicated, the frequency offset of the second set of SSB may be set to a default frequency offset or a first frequency offset of the first set of SSB.

In one embodiment, the UE 600 may further perform a first communication operation according to the first signaling. In various embodiments, the first communication operation may include at least one of physical downlink control channel (PDCCH) monitoring, CSI measurement, CSI report, beam failure detection (BFD), beam failure recovery (BFR), radio link monitoring (RLM); or PDSCH reception.

In one embodiment, the UE 600 monitors the plurality of first type SSBs for at least one of PDCCH detection, BFD, BFR, or RLM.

In one embodiment, the UE 600 may further perform a second communication operation according to the second signaling. In various embodiments, the second communication operation may include at least one of PDCCH monitoring, CSI measurement, CSI report, BFD, BFR; or PDSCH reception.

In one embodiment, the first communication operation may be performed during a first period, and the second communication operation may be performed during a second period.

For example, the UE 600 may determine a first specific SSB (e.g., any of SSB#0 to SSB#7) belonging to the plurality of first SSBs, and perform the first communication operation by using the first specific SSB during the first period. In addition, the UE 600 may determine a second specific SSB (e.g., SSB#0 or SSB#1) belonging to the plurality of second SSBs, and perform the second communication operation by using the second specific SSB during the second period.

In one embodiment, at least one SSB of the first set of SSB has a QCL relationship with at least one SSB of the second set of SSB.

In one embodiment, the first period and the second period may be the Cell-DTX ON duration and the Cell-DTX OFF duration, respectively.

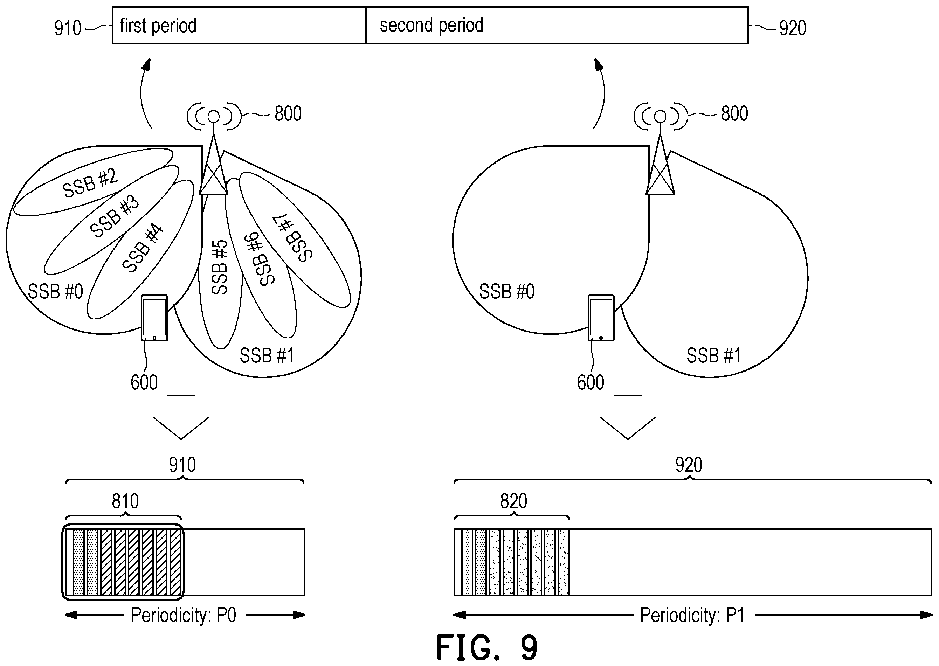

See FIG. 9, which shows a schematic diagram of Cell-DTX mechanism according to an embodiment of the disclosure.

In FIG. 9, the UE 600 may receive the first signaling (e.g., an MAC-CE signaling) carrying the first bitmap that indicates the first set of SSB (e.g., SSB#0 to SSB#7) for the first period 910 (e.g., the Cell-DTX ON duration). For example, the first bitmap may be characterized by "mediumBitmap {ssb-PositionsInBurst-NES [1111 1111]}".

In addition, the UE 600 may receive the second signaling (e.g., an RRC) carrying the second bitmap that indicates the second set of SSB (e.g., SSB#0 and SSB#1) for the second period 920 (e.g., the Cell-DTX OFF duration). For example, the second bitmap may be characterized by "mediumBitmap {ssb-PositionsInBurst-NES [1100 0000]}".

That is, the network node 800 may transmit SSB#0 to SSB#7 in the first period 910, which is beneficial for channel capacity. On the other hand, the network node 800 may transmit SSB#0 and SSB#1 in the second period 920, which is beneficial for network energy saving.

From another perspective, the cell coverage is not degraded because the first type SSBs (e.g., SSB#0 and SSB#1) can also support the same cell coverage as the second type SSBs (e.g., SSB#2 to SSB#7), such that the control link can be maintained.

In FIG. 9, the first periodicity (e.g., P0) of the first set of SSB may be different from the second periodicity (e.g., P1) of the second set of SSB. Moreover, the second periodicity (e.g., P1) of the second set of SSB may be the multiple of the first periodicity (e.g., P0) of the first set of SSB (e.g., P1=K*P0, wherein K is a positive integer).

In addition, the legacy UE will not suffer specification impact since the first type SSBs transmission remains the same for both of the first period 910 and the second period 920.

In one embodiment, the UE 600 (e.g., the NES UE) may communicate with the NES cell via either the first type SSBs (e.g., SSB#0 or SSB#1) or the second type SSBs (e.g., any of SSB#2 to SSB#7) and reports the selection result to the network node 800 in the first period 910.

On the other hand, the UE 600 (e.g., the NES UE) may communicate with the NES cell via the first type SSBs (e.g., SSB#0 or SSB#1) and reports the selection result to the network node 800 in the second period 920.

In one embodiment, if the UE 600 communicates with the NES Cell via the second type of SSB (e.g., any of SSB#2 to SSB#7) during the first period 910 (e.g., the Cell-DTX ON duration), the UE 600 may be aware that the UE 600 may fallback to the corresponding first type SSBs (e.g., SSB#0 or SSB#1) when (or before) transferring from the first period 910 to the second period 920.

For example, if the UE 600 communicates with the NES Cell via SSB#2 during the first period 910, the UE 600 may be aware that the UE 600 may fallback to SSB#0 that has a QCL relationship with SSB#2 when (or before) transferring from the first period 910 to the second period 920. For another example, if the UE 600 communicates with the NES Cell via SSB#6 during the first period 910, the UE 600 may be aware that the UE 600 may fallback to SSB#1 that has a QCL relationship with SSB#6 when (or before) transferring from the first period 910 to the second period 920.

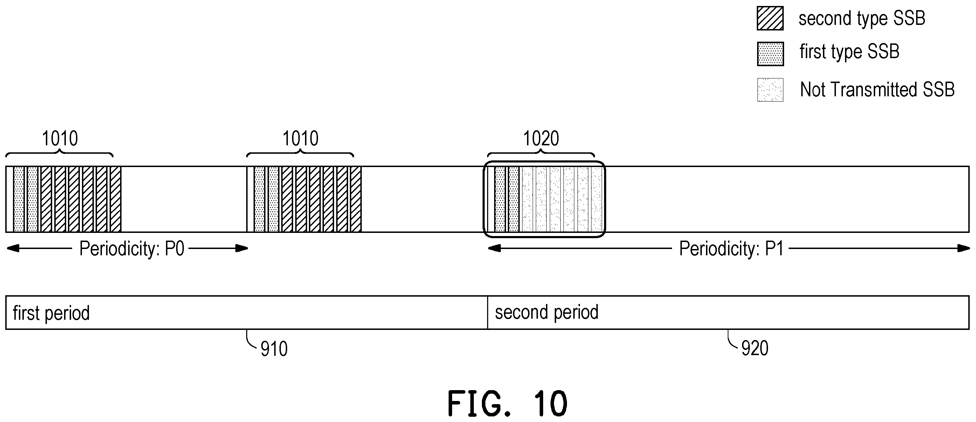

See FIG. 10, which shows a schematic diagram of different SSB transmission patterns in different periods according to FIG. 9.

In FIG. 10, the network node 800 may transmit the first SSB burst 1010 with the first periodicity (e.g., P0) in the first period 910, wherein the first SSB burst 1010 may include SSB#0 to SSB#7 of FIG. 9.

In addition, the network node 800 may transmit the second SSB burst 1020 with the second periodicity (e.g., P1) in the second period 920, wherein the second SSB burst 1020 may include SSB#0 and SSB#1 of FIG. 9 (i.e., SSB#2 to SSB#7 are not transmitted).

In the embodiment, the first type SSBs (e.g., SSB#0 and SSB#1) may be used for PDCCH detection (PDCCH by a CORESET with a TCI state (e.g., SSB #0 or SSB#1 or the CSI-RS having a QCL relationship with SSB #0 or #1).

In addition, the first and second type SSBs may be used for PDSCH reception, but the disclosure is not limited thereto.

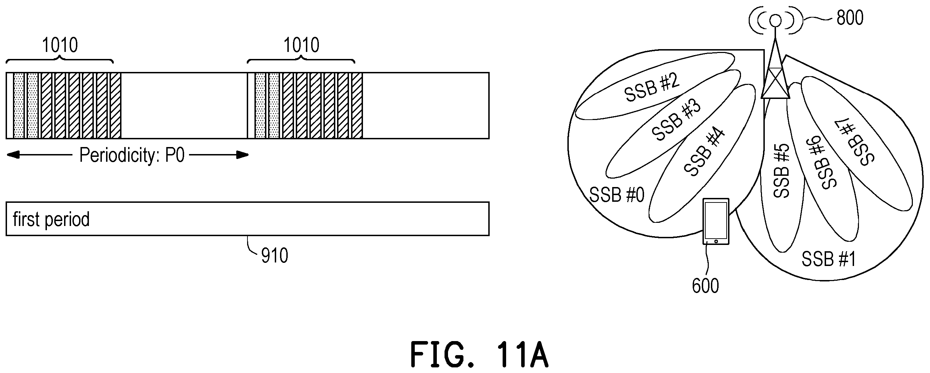

See FIG. 11A, which shows a schematic diagram of the UE behavior in the first period according to FIG. 10.

In FIG. 11A, in the first period 910, the UE 600 may be configured/indicated with the first bitmap characterized by "mediumBitmap {ssb-PositionsInBurst-NES [1111 1111]}" with the first periodicity of P0. In this case, the UE 600 may monitor the first type SSBs (e.g., SSB#0 and SSB#1) for PDCCH detection, BFD, BFR, and RLM. In addition, the UE 600 may monitor the first and second type SSBs for time/frequency synchronization, CSI measurement, and PDSCH reception, but the disclosure is not limited thereto.

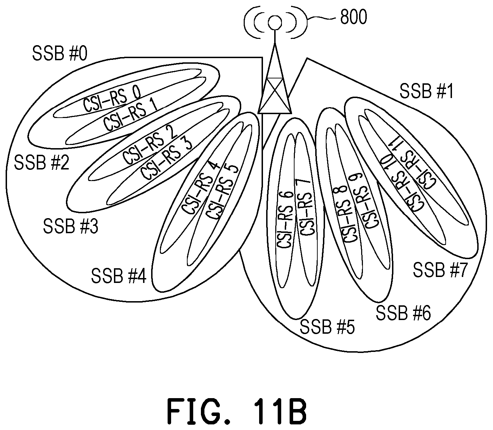

See FIG. 11B, which shows a schematic diagram of performing CSI measurement and report in the first period according to FIG. 11A.

In the embodiment, in the first period 910, the UE 600 may perform CSI measurement and report by using CSI-RS 0 to CSI-RS 11 that having QCL relationships with SSB#2 to SSB#7.

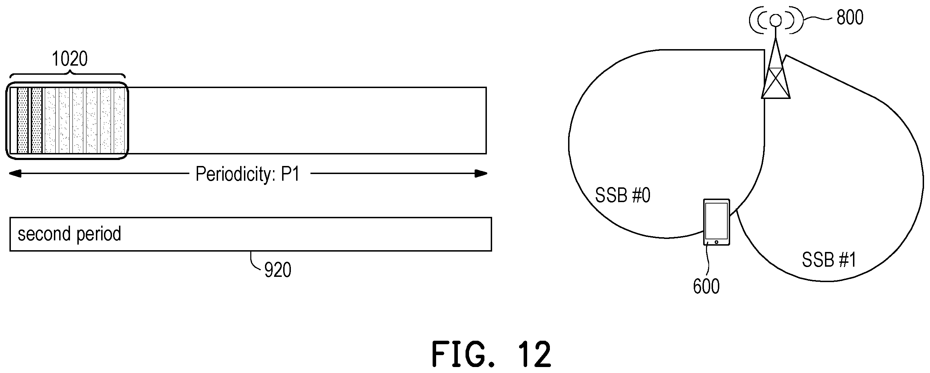

See FIG. 12, which shows a schematic diagram of the UE behavior in the second period according to FIG. 10.

In FIG. 12, in the second period 920, the UE 600 may be configured/indicated with the second bitmap characterized by "mediumBitmap {ssb-PositionsInBurst-NES [1100 0000]}" with the second periodicity of P1. In this case, the UE 600 may monitor the first type SSBs (e.g., SSB#0 and SSB#1) for PDCCH detection, BFD, BFR, and RLM. In addition, the UE 600 may monitor the first and second type SSBs for time/frequency synchronization, CSI measurement.

In this case, the UE 600 does not require to perform CSI measurement and report for the second type SSBs (e.g., SSB#2 to SSB#7). In addition, the UE 600 does not perform CSI measurement and report for CSI-RS 0 to CSI-RS 11 having QCL relationships with the second type SSBs.

In one embodiment, the network node 800 in the scenario of FIG. 10 may transmit only one bitmap to the legacy UE (e.g., the legacy UE 899 in FIG. 8D).

For example, legacy UE is configured with the bitmap characterized by "mediumBitmap {ssb-PositionsInBurst [1100 0000]}" with the periodicity of P0.

In this case, the legacy UE may communicate with NES cell via one of the first type SSBs (e.g. SSB #0 or SSB#1), and reports the selection result to the network node 800.

In addition, the legacy UE may perform measurements on the first type SSBs (e.g., SSB #0 or SSB#1} and selects one of the first type SSBs and report the selection result to the network node 800.

Accordingly, the legacy UE will not suffer specification impact since the first type SSBs transmissions remain the same for the first period 910 and the second period 920.

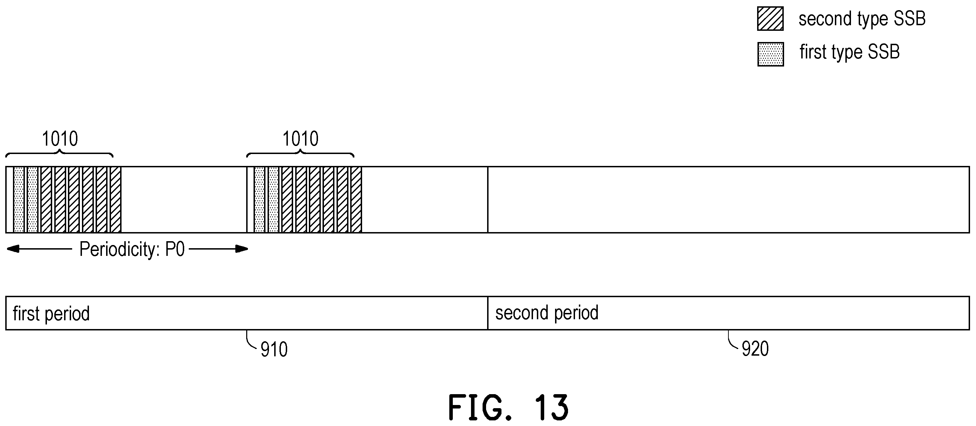

See FIG. 13, which shows a schematic diagram of no SSB transmission in the second period according to FIG. 10.

In FIG. 13, the network node 800 may transmit the first SSB burst 1010 with the first periodicity (e.g., P0) in the first period 910, wherein the first SSB burst 1010 may include SSB#0 to SSB#7 of FIG. 9.

However, the network node 800 may not transmit any SSB burst in the second period 920 (i.e., SSB#0 to SSB#7 are not transmitted).

In some embodiments, the scenario of FIG. 13 may be applied in specific situations such as short Cell-DTX OFF duration (i.e., the second period 920 is short) and/or the SCell is SSB-less, but the disclosure is not limited thereto. In this case, the legacy UE may not be supported in the scenario of FIG. 13.

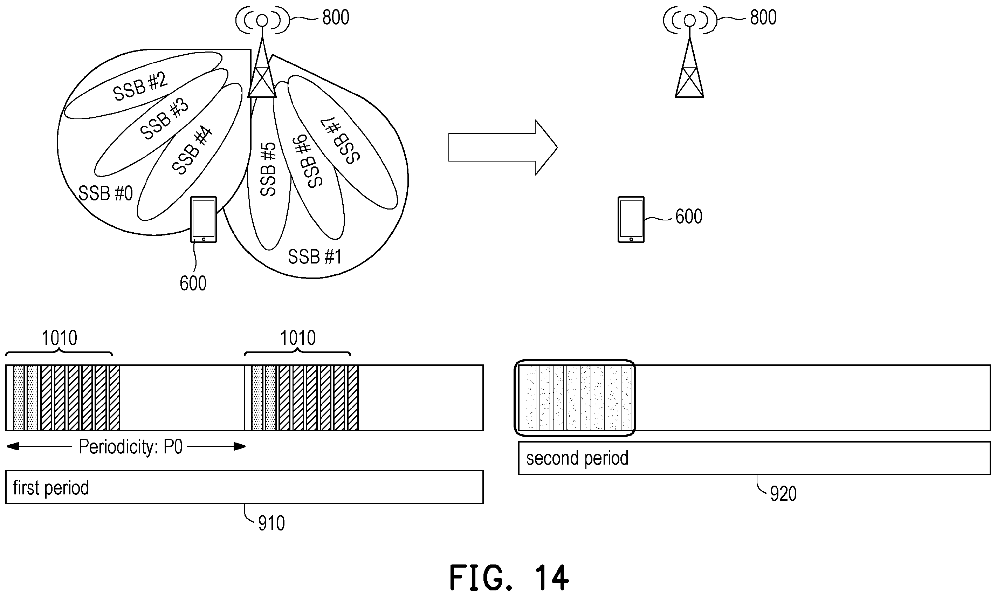

See FIG. 14, which shows a schematic diagram of the UE behavior in the first period and second period according to FIG. 13.

In FIG. 14, in the first period 910, the UE 600 may be configured/indicated with the first bitmap characterized by "mediumBitmap {ssb-PositionsInBurst-NES [1111 1111]}" with the first periodicity of P0. In this case, the UE 600 may monitor the first and second type SSBs for time/frequency synchronization, CSI measurement, and PDSCH reception. In addition, the UE 600 may monitor the first type SSBs for PDCCH detection, BFD, BFR, and RLM, but the disclosure is not limited thereto.

In the second period 920, the UE 600 may be configured/indicated with the second bitmap characterized by "mediumBitmap {ssb-PositionsInBurst-NES [0000 0000]}". In this case, the UE 600 may not monitor any SSB for time/frequency synchronization, CSI measurement, PDCCH detection, BFD, BFR, and RLM

In some embodiments, the network node 800 may transmit the first type SSBs and a part of the subsets corresponding to the first type SSBs to handle different coverage with different traffic loads.

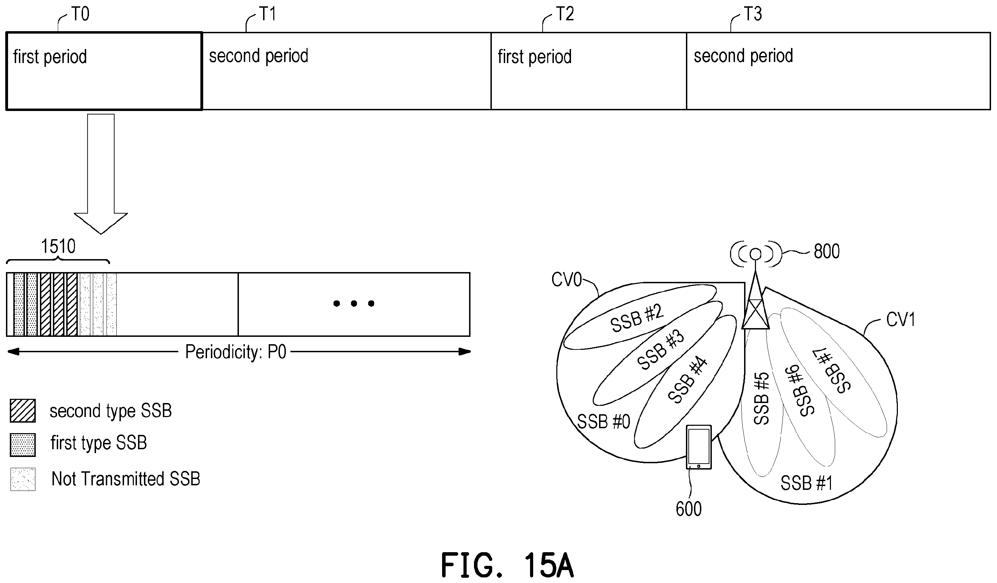

See FIG. 15A, which shows a schematic diagram of configuring SSB transmission patterns in response to traffic loads according to an embodiment of the disclosure.

In FIG. 15A, the first periods T0 and T2 may be, for example, Cell-DTX ON durations, and the second periods T1 and T3 may be, for example, Cell-DTX OFF durations, but the disclosure is not limited thereto.

In the embodiment, assuming that the traffic load in the first beam coverage CV0 is high and the traffic load in the first beam coverage CV1 is low in the first period T0, the network node 800 may transmit the first SSB burst 1510 with the first periodicity (e.g., P0) in the first period T0, wherein the first SSB burst 1510 may include SSB#0 to SSB#4 of FIG. 9.

In this case, the transmitted SSB#0 and SSB#2 to SSB#4 may be used to handle the high traffic load in the first beam coverage CV0.

On the other hand, the transmitted SSB#1 may be enough to handle the low traffic load in the first beam coverage CV1, and hence SSB#5 to SSB#7 may not be transmitted.

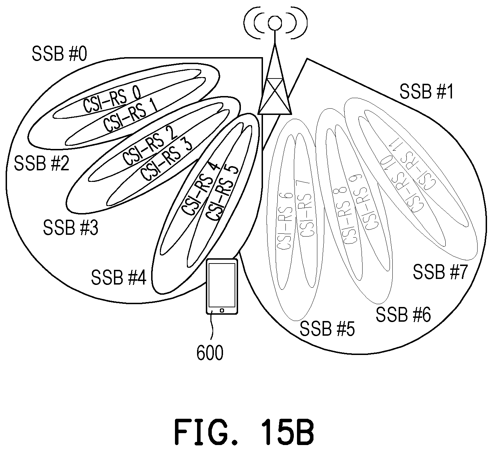

See FIG. 15B, which shows a schematic diagram of performing CSI measurement and report in the first period according to FIG. 15A.

In the embodiment, in the first period T0, the UE 600 may perform CSI measurement and report by using CSI-RS 0 to CSI-RS 5 that having QCL relationships with SSB#2 to SSB#4.

In addition, the UE 600 may not perform CSI measurement and report by using CSI-RS 6 to CSI-RS 11 that having QCL relationships with SSB#5 to SSB#7.

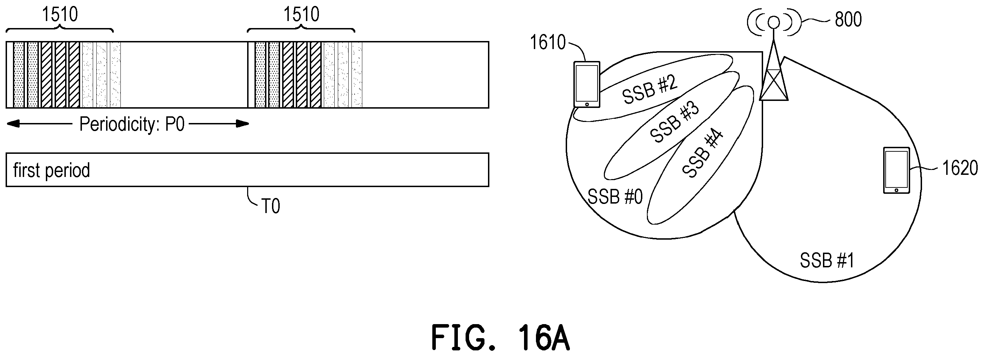

See FIG. 16A, which shows a schematic diagram of the UE behavior in the first period according to FIG. 15A.

In FIG. 16A, in the first period T0, the UEs 1610 and 1620 (e.g., NES UEs) may be configured/indicated with the first bitmap characterized by "mediumBitmap {ssb-PositionsInBurst-NES [1111 1000]}" with the first periodicity of P0. In this case, the UEs 1610 and 1620 may monitor the first type SSBs (e.g., SSB#0 and SSB#1) for PDCCH detection, BFD, BFR, and RLM. In addition, the UEs 1610 and 1620 may monitor SSB#0 to SSB#4 for time/frequency synchronization, CSI measurement, and PDSCH reception, but the disclosure is not limited thereto.

In the scenario of FIG. 16A, the UE 1610 may use SSB#2, and the UE 1620 may use SSB#1. Since the UE 1620 uses SSB#1, the UE 1620 may not need to monitor SSB#5 to SSB#7 for time/frequency synchronization and CSI measurement, but the disclosure is not limited thereto.

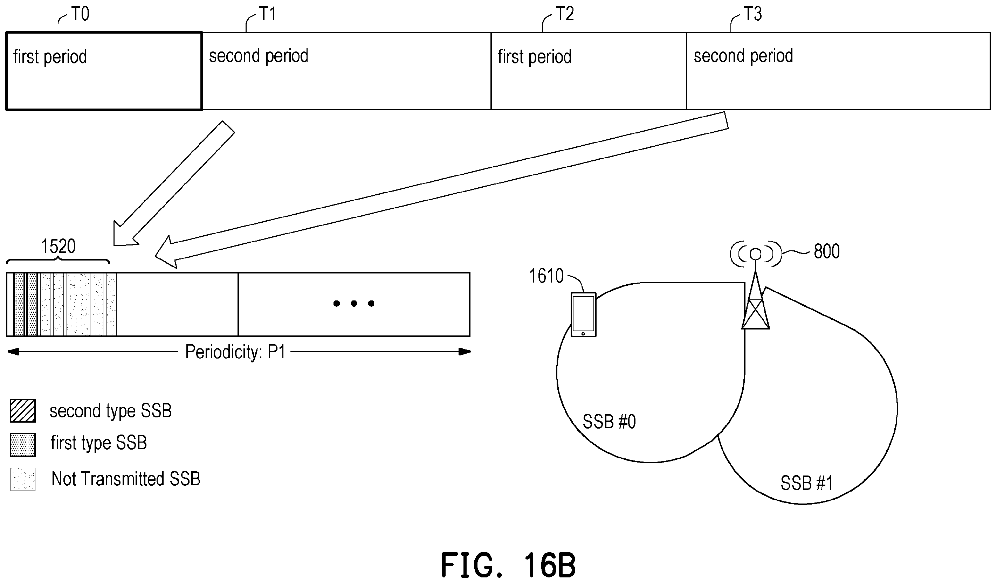

See FIG. 16B, which shows a schematic diagram of the UE behavior in the second period according to FIG. 16A.

In FIG. 16B, in the second periods T1 and/or T3, the UE 1610 may be configured/indicated with the second bitmap characterized by "mediumBitmap {ssb-PositionsInBurst-NES [1100 0000]}" with the second periodicity of P1. That is, the network node 800 may transmit the second SSB burst 1520 that includes SSB#0 and SSB#1.

In the embodiment, the UE 1610 may monitor the first type SSBs (e.g., SSB#0 and SSB#1) for PDCCH detection, BFD, BFR, and RLM in the second periods T1 and/or T3. In addition, the UE 1610 may monitor the first type SSBs (e.g., SSB#0 and SSB#1) for time/frequency synchronization, CSI measurement in the second periods T1 and/or T3.

In the embodiment, the UE 1610 does not require to perform CSI measurement and report for the second type SSBs (e.g., SSB#2 to SSB#7) in the second periods T1 and/or T3. In addition, the UE 1610 does not perform CSI measurement and report for CSI-RS 0 to CSI-RS 11 having QCL relationships with the second type SSBs in the second periods T1 and/or T3.

In FIG. 16B, it is assumed that SSB#0 is used by the UE 1610 in the second periods T1 and/or T3. In this case, the UE 1610 may not require to monitor SSB #2 to SSB#7 for time/frequency synchronization and CSI measurement in the second periods T1 and/or T3.

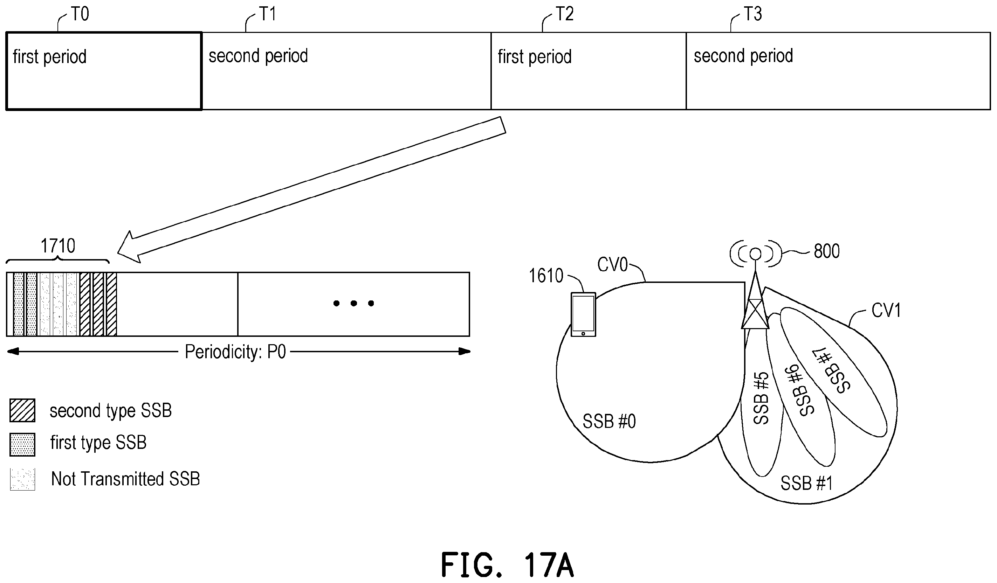

See FIG. 17A, which shows a schematic diagram of configuring SSB transmission patterns in response to traffic loads according to FIG. 15A.

In, assuming that the traffic load in the first beam coverage CV0 is low and the traffic load in the first beam coverage CV1 is high in the first period T2, the network node 800 may transmit the first SSB burst 1710 with the first periodicity (e.g., P0) in the first period T2, wherein the first SSB burst 1710 may include SSB#0, SSB#1, and SSB#5 to SSB#7 of FIG. 9.

In this case, the transmitted SSB#1 and SSB#5 to SSB#7 may be used to handle the high traffic load in the first beam coverage CV1 in the first period T2.

On the other hand, the transmitted SSB#0 may be enough to handle the low traffic load in the first beam coverage CV0, and hence SSB#2 to SSB#4 may not be transmitted in the first period T2.

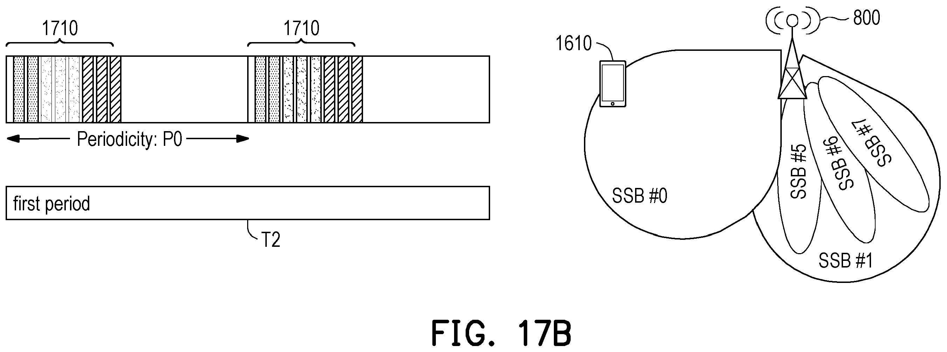

See FIG. 17B, which shows a schematic diagram of the UE behavior in the first period according to FIG. 17A.

In FIG. 17B, in the first period T2, the UE 1610 may be configured/indicated with the first bitmap characterized by "mediumBitmap {ssb-PositionsInBurst-NES [1100 0111]}" with the first periodicity of P0. In this case, the UE 1610 may monitor the first type SSBs (e.g., SSB#0 and SSB#1) for PDCCH detection, BFD, BFR, and RLM in the first period T2. In addition, the UE 1610 may monitor SSB#0, SSB#1, and SSB#5 to SSB#7 for time/frequency synchronization, CSI measurement, and PDSCH reception in the first period T2, but the disclosure is not limited thereto.

In the scenario of FIG. 17B, the UE 1610 may use SSB#0 in the first period T2, and since the UE 1610 uses SSB#0, the UE 1610 may not need to monitor SSB#2 to SSB#4 for time/frequency synchronization and CSI measurement in the first period T2, but the disclosure is not limited thereto.

In the embodiment, the network node 800 in the scenario of FIG. 15 to FIG. 17 may transmit only one bitmap to the legacy UE (e.g., the legacy UE 899 in FIG. 8D).

For example, the legacy UE may configured with the bitmap characterized by "mediumBitmap {ssb-PositionsInBurst [1100 0000]}" with the periodicity of P0.

In this case, the legacy UE may monitor the first type SSBs (e.g., SSB#0 and SSB#1) for time/frequency synchronization and CSI measurement.

In addition, the legacy UE may measure the first type SSBs (e.g., SSB#0 and SSB#1), select one of the first type SSBs, and accordingly report the selection result to the network node 800.

Accordingly, the legacy UE will not suffer specification impact since the first type SSBs transmissions remain the same for the first periods T0, T2 and the second period T1, T3.

In some embodiments of the disclosure, the network node 800 may transmit the first set of SSB by default. That is, the network node 800 may be configured to continuously operate by following the mechanism corresponding to the first period in the above embodiments.

In this case, the network node 800 may be switched from transmitting the first set of SSB to transmitting the second set of SSB under some particular conditions. That is, the network node 800 may be configured to switch to operate by following the mechanism corresponding to the second period in the above embodiments under some particular conditions.

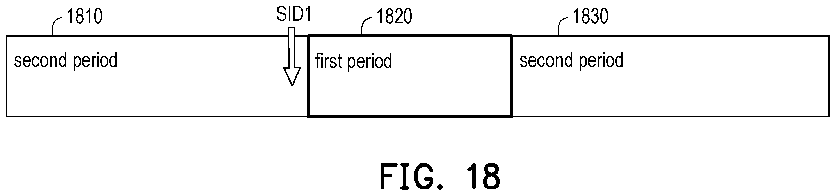

See FIG. 18, which shows a schematic diagram of switching between transmitting the first set of SSB in the first period and the second set of SSB in the second period according to an embodiment of the disclosure.

In FIG. 18, the network node may transmit the second set of SSB (e.g., SSB#0 and SSB#1 in FIG. 9) in the second period 1810 and/or 1830, and hence the NES UE may be configured to receive the second set of SSB by default.

In one embodiment, the network node may decide to switch from transmitting the second set of SSB in the second period 1810 to transmitting the first set of SSB (e.g., SSB#0 to SSB#7 in FIG. 9) in the first period 1820. In this case, the network node may send a first SSB indicator SID1 to the NES UE before the first period 1820, wherein the first SSB indicator SID1 may indicate the activation of the first set of SSB (e.g., SSB#0 to SSB#7).

Accordingly, the NES UE may perform the first communication operation (e.g., SSB reception) according to the first SSB indicator SID1 for the first period 1820.

In the embodiments of the disclosure, the activation and/or deactivation of the first period 1820 may be determined in various ways.

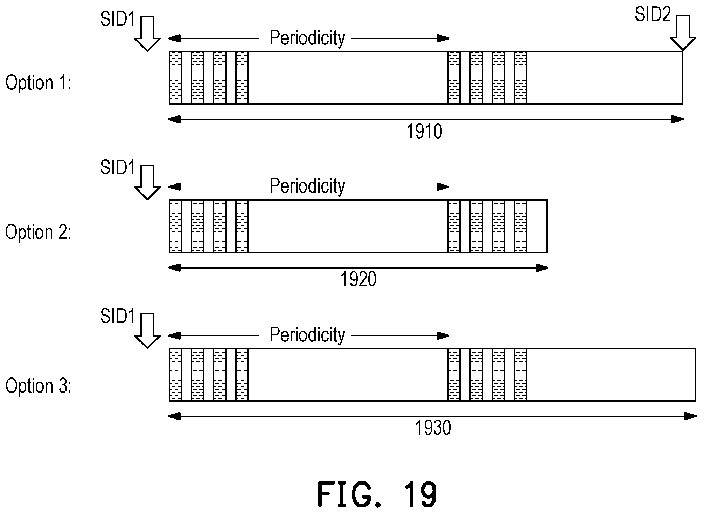

See FIG. 19, which shows a schematic diagram of different options for determining the activation and/or deactivation of the first period according to FIG. 18.

In Option 1, the NES UE may receive a second SSB indicator SID2 for stop performing the first communication operation during the first period 1910. That is, the NES UE may switch from receiving the first set of SSB (e.g., SSB#0 to SSB#7) to receiving the second set of SSB (e.g., SSB#0 and SSB#1) in response to receiving the second SSB indicator SID2. In Option 1, the NES UE may start to receive the first set of SSB (e.g., SSB#0 to SSB#7) in the first period 1910 after the NES UE receives a first SSB indicator SID1. And the NES UE may stop to receive the first set of SSB (e.g., SSB#0 to SSB#7) in the first period 1910 after the NES UE receives a second SSB indicator SID2.

In some embodiments, the second SSB indicator SID2 may be a DCI signalling, a MAC-CE, or a RRC signalling.

In Option 2, the first SSB indicator SID1 may activate the transmission of the first set of SSB (e.g., SSB#0 to SSB#7) in the first period 1920. The transmission of the first set of SSB (e.g., SSB#0 to SSB#7) in the first period 1920 may be deactivated after a time duration (e.g., B) wherein the time duration (e.g., B) may be preconfigured, fixed, configurable, or indicated by the first SSB indicator SID1. That is, the first SSB indicator SID1 may carry the information of the time duration (e.g., B) of the first period 1920. In response to the time duration (e.g., B) , the NES UE may accordingly determine an end time of the first period 1920. In this case, in response to determining that the end time of the first period 1920 has been reached, the NES UE may stop performing the first communication operation during the first period 1920. That is, the NES UE may switch from receiving the first set of SSB (e.g., SSB#0 to SSB#7) to receiving the second set of SSB (e.g., SSB#0 and SSB#1) in response to the end time of the first period 1920 has been reached.

In Option 3, the first SSB indicator SID1 may activate the transmission of the first set of SSB (e.g., SSB#0 to SSB#7) in the first period 1930. The transmission of the first set of SSB (e.g., SSB#0 to SSB#7) in the first period 1930 may be deactivated after a number of the first SSB bursts (e.g., W) has been transmitted, wherein the number of the first SSB bursts (e.g., W) may be preconfigured, fixed, configurable, or indicated by the first SSB indicator SID1. In Option 3, the NES UE may start to receive the first set of SSB (e.g., SSB#0 to SSB#7) in the first period 1930 after the NES UE receives a first SSB indicator SID1. And the NES UE may stop to receive the first set of SSB (e.g., SSB#0 to SSB#7) in the first period 1930 after the NES UE receives W times of the first SSB burst. In response to the number of the first SSB burst (e.g., W), the NES UE may stop performing the first communication operation during the first period 1930 if W times of the first SSB burst has been transmitted (e.g., W=2 in FIG. 19). That is, the NES UE may switch from receiving the first set of SSB (e.g., SSB#0 to SSB#7) to receiving the second set of SSB (e.g., SSB#0 and SSB#1) after W times of the first SSB burst has been transmitted.

In the embodiments where the first SSB indicator SID1 and/or the second SSB indicator SID2 are transmitted, the NES UE may receive the SSBs by following the SSB pattern indicated in the first SSB indicator SID1 and/or the second SSB indicator SID2.

For example, when the NES UE receives the first SSB indicator SID1 indicating SSB#0 to SSB#7, the NES UE may accordingly receive SSB#0 to SSB#7 during, for example, the first period 1910 (which may be a period corresponding to high traffic load).

In addition, when the NES UE receives the second SSB indicator SID2 indicating SSB#0 to SSB#4, the NES UE may accordingly receive SSB#0 to SSB#4 for the periods (which may be one or more periods corresponding to low traffic load) after the first period 1910.

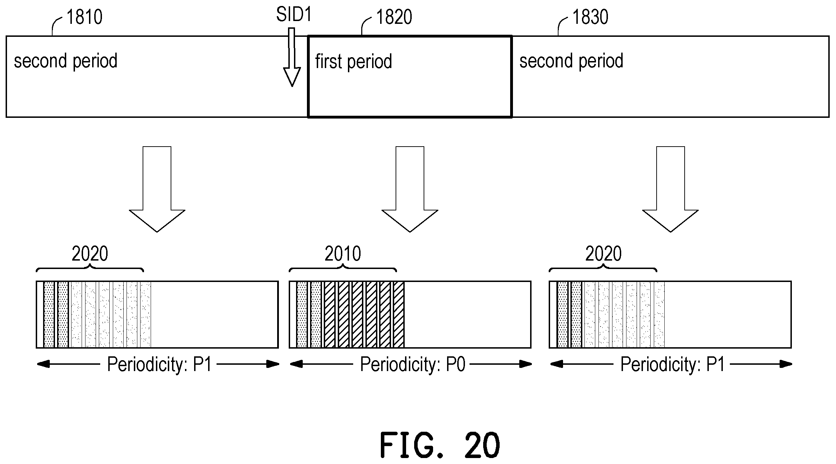

See FIG. 20, which shows a schematic diagram of UE behavior according to FIG. 18 and FIG. 19.

In FIG. 20, the network node may transmit the second SSB burst 2020 (which includes SSB#0 and SSB#1) in the second period 1810 by default.

In the embodiment, the network node may send the first SSB indicator SID1 to the NES UE, wherein the first SSB indicator SID1 may indicate the activation of the first SSB burst 2010 (which includes SSB#0 to SSB#7).

After the first period 1820 ends, the network node may transmit the second SSB burst 2020 (which includes SSB#0 and SSB#1) in the second period 1830 again.

In the embodiment, the NES UE may use SSB#0 to SSB#7 for at least one of PDCCH monitoring and PDSCH reception.

In one embodiment, if the NES UE monitors the second type SSBs (e.g., SSB #2 to SSB #7) for the at least one PDCCH, it can be associated with the first type SSBs (e.g., SSB #0 and SSB #1) if needed.

In FIG. 20, for the second periods 1810 and 1830 (which can be understood as default periods), the NES UE is configured/indicated with the second bitmap characterized by "mediumBitmap {ssb-PositionsInBurst-NES [1100 0000]}" with the second periodicity of P1.

In this case, the NES UE may monitor the first type SSBs (e.g., SSB #0 and SSB#1) for time/frequency synchronization, PDCCH monitoring, and/or PDSCH reception in the second periods 1810 and 1830.

In addition, the NES UE may not monitor the second type SSBs (e.g., SSB#2 to SSB#7) for time/frequency synchronization, PDCCH monitoring, and/or PDSCH reception in the second periods 1810 and 1830.

The NES UE may communicate with the NES cell via the first type SSBs (e.g., SSB#0 and SSB#1) in the second periods 1810 and 1830, and the NES UE may monitor the first type SSBs for CSI measurement, BFD, BFR, and RLM in the second periods 1810 and 1830]

On the other hand, for the first period 1820 (which can be understood as indicated periods), the NES UE is configured/indicated with the first bitmap characterized by "mediumBitmap {ssb-PositionsInBurst-NES [1111 1111]}" with the first periodicity of P0.

In this case, the NES UE may monitor the first type SSBs and the second type SSBs (e.g., SSB #0 to SSB#7) for time/frequency synchronization, PDCCH monitoring, and/or PDSCH reception in the first period 1820.

The NES UE may communicate with the NES cell via the first type SSBs and the second type SSBs (e.g., SSB #0 to SSB#7) in the first period 1820, and the NES UE may monitor the first type SSBs and the second type SSBs (e.g., SSB #0 to SSB#7) for CSI measurement, BFD, BFR, and RLM in the first period 1820.

In the embodiment, in the first period 1820, the NES UE may perform CSI measurement and report by using the CSI-RSs (e.g., CSI-RS 0 to CSI-RS 11 in FIG. 11B) that having QCL relationships with SSB#2 to SSB#7, and the schematic diagram may be referred to FIG. 11B.

In the scenario of FIG. 20, if the NES UE communicates with the NES cell via the second type SSBs (e.g., SSB #2) during the first period 1820 (i.e., the indicated period), the NES UE may be aware that the NES UE may fallback to the corresponding first type SSBs (e.g., SSB #0 having a QCL relationship with SSB#2) after the first period 1820 ends. For example, the RS of the TCI state may change from SSB#2 to SSB #0, and the TCI state of a CORESET may change from SSB #2 to SSB #0.

In some embodiments, the first SSB indicator SID1 may carry different bit combinations corresponding to different SSB combinations, which may be exemplarily shown in the following Table 1.

**Table 1**

| Bit combination in SID1 | Transmitted SSBs |
|---|---|
| 00 | SSB #0, SSB #1, SSB #2, SSB #3, SSB #4, SSB #5, SSB #6, SSB #7 |
| 01 | SSB #2, SSB #3, SSB #4, SSB #5, SSB #6, SSB #7 |
| 10 | SSB #0, SSB #1, SSB #2, SSB #3, SSB #4 |
| 11 | SSB #0, SSB #1, SSB #5, SSB #6, SSB #7 |

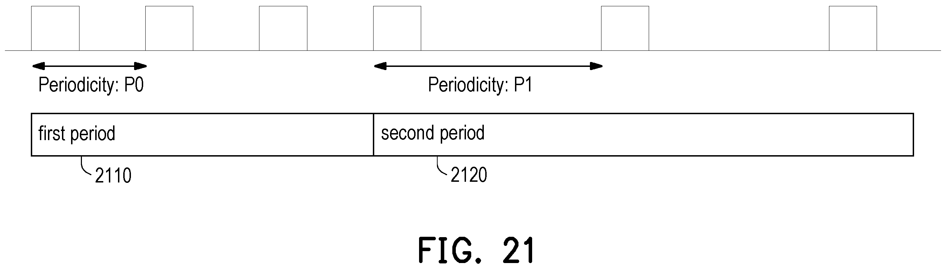

See FIG. 21, which shows a schematic diagram of the periodicity used in the first period and the second period according to an embodiment of the disclosure.

In FIG. 21, the second periodicity (e.g. P1) may be K times of the first periodicity (e.g., P0), wherein K may be a positive integer. In this case, the mechanism for transmitting the CSI reports in the first period 2110 and the second period 2120 may be carried out in different ways.

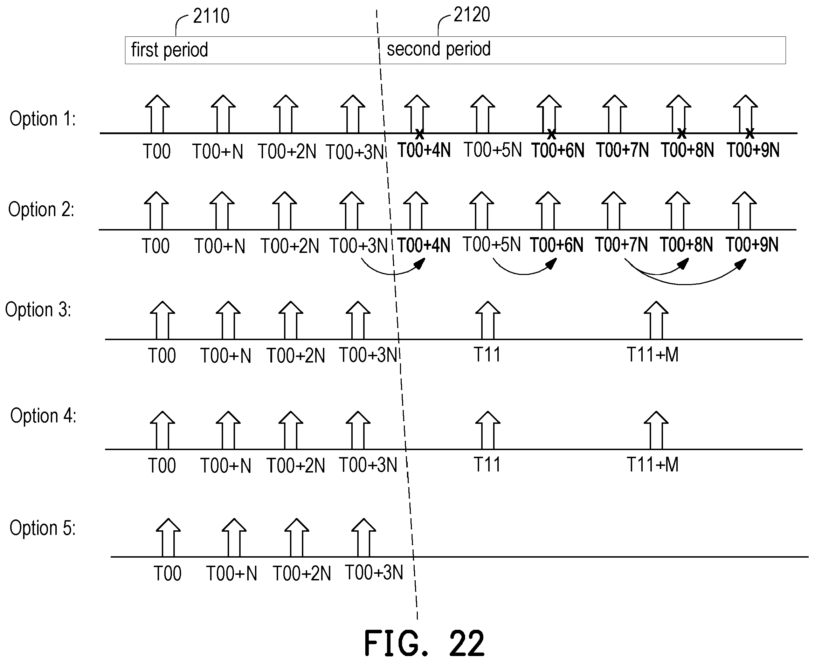

See FIG. 22, which shows a schematic of the mechanism for transmitting the CSI reports according to FIG. 21.

In FIG. 21, the UE may transmit the corresponding CSI reports at time points T00, T00+N, T00+2N, and T00+3N for the first period 2110 in each of the options (N is the periodicity).

However, the strategy for the UE to transmit CSI reports during the second period 2120 may be different in for different options.

In Option 1, the UE may not transmit CSI report if no updated CSI report is determined. For example, if the CSI report determined at the time point T00+4N is the same as the CSI report determined at the time point T00+3N, the UE may not transmit the CSI report at the time point T00+4N. For another example, if the CSI report determined at the time point T00+6N is the same as the CSI report determined at the time point T00+5N, the UE may not transmit the CSI report at the time point T00+6N. Likewise, if the CSI reports determined at the time points T00+8N and T00+9N are the same as the CSI report determined at the time point T00+7N, the UE may not transmit the CSI reports determined at the time points T00+8N and T00+9N.

In Option 2, the UE may transmit the previous CSI report if no updated CSI report is determined. For example, if the CSI report determined at the time point T00+4N is the same as the CSI report determined at the time point T00+3N, the UE may transmit the CSI report corresponding to the time point T00+3N again at the time point T00+4N. For another example, if the CSI report determined at the time point T00+6N is the same as the CSI report determined at the time point T00+5N, the UE may transmit the CSI report corresponding to the time point T00+5N again at the time point T00+6N. Likewise, if the CSI reports determined at the time points T00+8N and T00+9N are the same as the CSI report determined at the time point T00+7N, the UE may transmit the CSI report corresponding to the time point T00+7N again at the time points T00+8N and T00+9N.

In Option 3, the UE may use different periodicity for transmitting the CSI reports in the first period 2110 and the second period 2120, and the resources for transmitting the CSI reports in the first period 2110 and the second period 2120 are the same PUCCH resource. For example, the periodicity for transmitting the CSI reports in the first period 2110 may be N, and the periodicity for transmitting the CSI reports in the second period 2120 may be M. In this case, for the second period 2120, the UE may transmit the CSI reports at time points T11 and T11+M, but the disclosure is not limited thereto.

In Option 4, the UE may use different periodicity for transmitting the CSI reports in the first period 2110 and the second period 2120, but resources for transmitting the CSI reports in the first period 2110 and the second period 2120 may be different PUCCH resources. For example, the periodicity for transmitting the CSI reports in the first period 2110 may be N, and the periodicity for transmitting the CSI reports in the second period 2120 may be M. In this case, for the second period 2120, the UE may transmit the CSI reports at time points T11 and T11+M, but the disclosure is not limited thereto.

In Option 5, the UE may not periodically transmit any CSI reports during the second period 2120. On the other hand, the transmission of CSI reports for the second period 2120 may be aperiodic triggered.

In the embodiments of the disclosure, the SSB monitoring and the CSI measurement/report of the UE may be configured by different patterns.

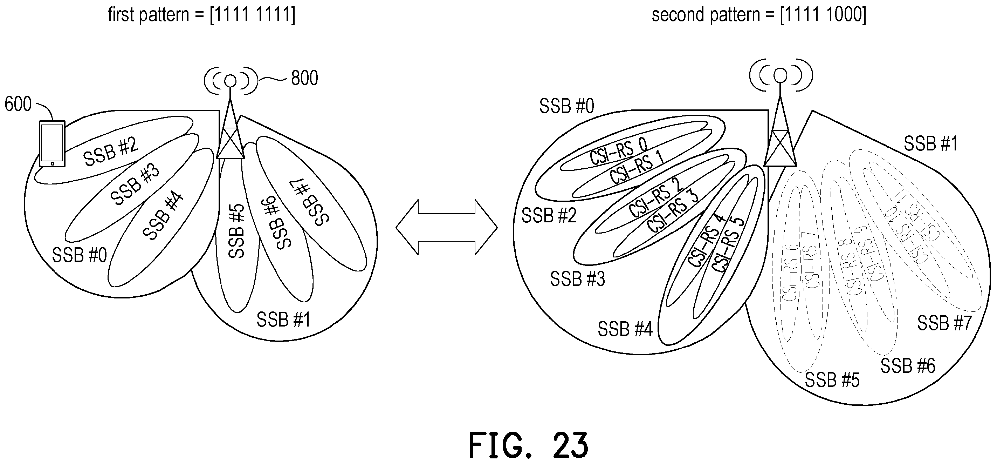

See FIG. 23, which shows a schematic diagram of using different patterns to configure the SSB monitoring and CSI measurement/report according to an embodiment of the disclosure.

In FIG. 23, the SSB monitoring for the UE 600 may be configured by the first pattern, which may be [1111 1111] for indicating SSB#0 to SSB#7. Accordingly, the UE 600 may monitor SSB#0 to SSB#7.

In addition, the CSI measurement/report for the UE 600 may configured by the second pattern, which may be [1111 1000] for indicating CSI-RS 0 to CSI-RS 5 having QCL relationships with SSB#0 to SSB#4. Accordingly, the UE 600 may perform CSI measurement and report for CSI-RS 0 to CSI-RS 5 and not perform CSI measurement and report for CSI-RS 6 to CSI-RS 11.

In one embodiment, considering periodic CSI-RS measurement/report for CSI acquisition (e.g. CQI, RI, PMI), the UE 600 may monitor the corresponding CSI-RS resource for the first period (e.g., the first period 2110 in FIG. 21), but not monitor the corresponding CSI-RS resource for the second period (e.g., the second period 2120 in FIG. 21).

For the first period (e.g., a Cell-DTX ON duration or an indicated period), if the corresponding bits in the first pattern and the second pattern both indicate, for example, '1', the UE 600 may receive/monitor the corresponding CSI-RS resource for CSI acquisition.

In addition, the UE 600 may perform CSI reporting associated with the CSI reporting configuration ID.

On the other hand, if the corresponding bits in the first pattern and the second pattern both indicate, for example, '0', the UE 600 may not receive/monitor the corresponding CSI-RS resource for CSI acquisition. In addition, the UE 600 may not perform CSI reporting associated with the CSI reporting configuration ID (e.g., ignoring the CSI reporting configuration ID)

In one embodiment, aperiodic CSI report can be triggered to the UE 600 if needed.

For the second period (e.g. a Cell-DTX OFF duration or a default period), if the corresponding bits in the first pattern and the second pattern both indicate '1' or '0', the UE 600 may not receive/monitor the corresponding CSI-RS resource for CSI acquisition. In addition, the UE 600 may not perform CSI reporting associated with the CSI reporting configuration ID (e.g., ignoring the CSI reporting configuration ID).

In one embodiment, considering periodic CSI-RS measurement/report for beam management (e.g. RSRP, RSRQ), the UE 600 may monitor the corresponding CSI-RS resource for the first period, as well as the second period.

For the first period (e.g., a Cell-DTX ON duration or an indicated period) and the second period (e.g. a Cell-DTX OFF duration or a default period), if the corresponding bits in the first pattern and the second pattern both indicate, for example, '1', the UE 600 may receive/monitor the corresponding CSI-RS resource for beam management. In addition, the UE 600 may perform CSI reporting associated with the CSI reporting configuration ID.

On the other hand, if the corresponding bits in the first pattern and the second pattern both indicate, for example, '0', the UE 600 may not receive/monitor the corresponding CSI-RS resource for beam management. In addition, the UE 600 may not perform CSI reporting associated with the CSI reporting configuration ID (e.g., ignoring the CSI reporting configuration ID).

In one embodiment, if the UE 600 communicates with the NES cell via CSI-RS #n, it may also be aware that the UE 600 may fallback to SSB #k according to the first and second pattern (if CSI-RS #n has a QCL relationship with SSB #k). For example, the RS of the TCI state changes from CSI-RS #n to SSB #k, wherein CSI-RS #n has a QCL relationship with SSB #4. Accordingly, the TCI state of a CORESET changes from CSI-RS #n to SSB #4.

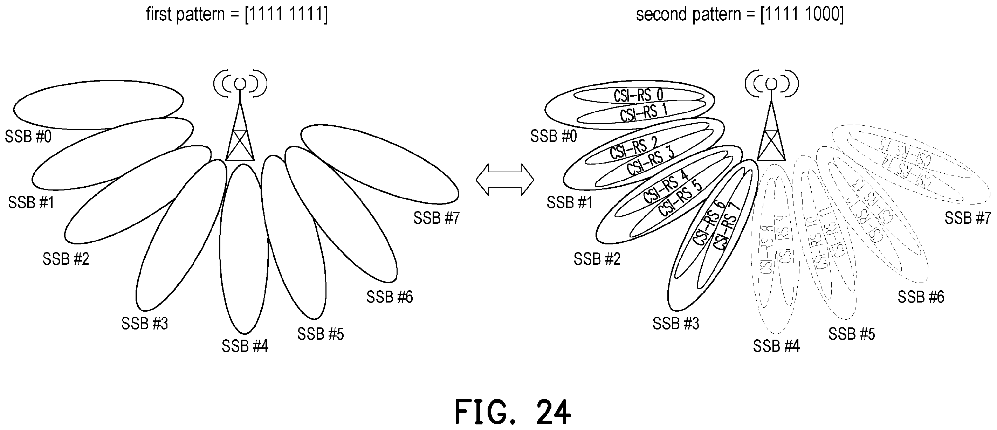

See FIG. 24, which shows another schematic diagram of using different patterns to configure the SSB monitoring and CSI measurement/report according to an embodiment of the disclosure.

In FIG. 24, the SSB monitoring for the UE 600 may be configured by the first pattern, which may be [1111 1111] for indicating SSB#0 to SSB#7. Accordingly, the NES UE may monitor SSB#0 to SSB#7.

In addition, the CSI measurement/report for the NES UE may configured by the second pattern, which may be [1111 0000] for indicating CSI-RS 0 to CSI-RS 7 having QCL relationships with SSB#0 to SSB#3. Accordingly, the NES UE may perform CSI measurement and report for CSI-RS 0 to CSI-RS 7and not perform CSI measurement and report for CSI-RS 8 to CSI-RS 15.

To sum up, embodiments of the disclosure achieve flexible control of network-side energy consumption by configuring a hybrid type of SSBs, including first type SSBs with larger coverage and second type SSBs with smaller coverage. Compared to conventional on-demand SSB transmission schemes that rely on network-triggered activation, the proposed hybrid SSB transmission strategy allows the network to maintain time and frequency synchronization with the UE using only the first type SSBs during energy-saving operation periods, while deactivating the second type SSBs to reduce transmission power.

Through this approach, the network can achieve longer idle periods without transmitting multiple SSBs, thereby enhancing overall power-saving efficiency. This hybrid SSB configuration offers a balance between synchronization reliability and energy performance, making it particularly effective for transitions between high-density and low-traffic scenarios, supporting dynamic energy adaptation and system optimization.

## Claims

1. A method of communication operation performed by a user equipment, UE, (600 , 1610, 1620), the method **characterized in** comprising:
receiving (S710) a first signaling for indicating a first information related to a first set of Synchronization Signal/PBCH Block (SSB), wherein the first signaling is a downlink control information, DCI, a radio resource control, RRC, signalling, or a media access control-control element, MAC-CE; and
receiving (S720) a second signaling for indicating a second information related to a second set of SSB, wherein the second signaling is a DCI signalling, a MAC-CE or a RRC signalling.

2. The method of claim 1, wherein the first information comprises at least one of a first configuration, a first periodicity, a first bitmap, a first center frequency, a first frequency offset, or a first transmission configuration indication, TCI;
wherein the first configuration comprises at least one of the first periodicity, the first bitmap, the first center frequency, or the first frequency offset.

3. The method of claims 1 or 2, wherein the second information comprises at least one of a second configuration, a second periodicity, a second bitmap, a second center frequency, a second frequency offset, a second TCI, or a quasi co-location, QCL, information;
wherein the second configuration comprises at least one of the second periodicity, the second bitmap, the second center frequency, or the second frequency offset.

4. The method of claim 2, wherein the first set of SSB comprises a plurality of first SSBs, the first bitmap comprises a plurality of first bits respectively corresponding to the plurality of first SSBs in the first set of SSB;
wherein a first bit value of one of the plurality of first bits indicates that the corresponding first SSB in the first set of SSB is transmitted, and a second bit value of the one of the plurality of first bits indicates that the corresponding first SSB in the first set of SSB is not transmitted.

5. The method of claim 3, wherein the second set of SSB comprises a plurality of second SSBs, the second bitmap comprises a plurality of second bits respectively corresponding to the plurality of second SSBs in the second set of SSB;
wherein a first bit value of one of the plurality of second bits indicates that the corresponding second SSB in the second set of SSB is transmitted, and a second bit value of the one of the plurality of second bits indicates that the corresponding second SSB in the second set of SSB is not transmitted.

6. The method of any of claims 1 to 5, further comprising:
performing a first communication operation according to the first signaling; and
performing a second communication operation according to the second signaling;
wherein the first communication operation is performed during a first period (910, 1820, 1910, 1920, 1930, T0, T2, 2110), and the second communication operation is performed during a second period (920, 1810, 1830, T1, T3, 2120).

7. The method of claim 6, wherein the first communication operation comprises at least one of following:
physical downlink control channel, PDCCH, monitoring;
channel state information, CSI, measurement;
CSI report;
beam failure detection, BFD;
beam failure recovery, BFR;
radio link monitoring, RLM; or
downlink physical channel, PDSCH, reception.

8. The method of claim 6, wherein the second communication operation comprises at least one of following:
PDCCH monitoring;
CSI measurement;
CSI report;
BFD;
BFR; or
PDSCH reception.

9. The method of claim 3, wherein the second periodicity is K times of a first periodicity, wherein K is a positive integer.

10. The method of claim 3, wherein if the second periodicity is not provided or indicated, a periodicity of the second set of SSB is set to a default period or a first periodicity of the first set of SSB.

11. The method of claim 3, wherein if the second bitmap is not provided or indicated, the second bitmap of the second set of SSB is set to a default bitmap or a first bitmap of the first set of SSB.

12. The method of claim 3, wherein if the second center frequency is not provided or indicated, a center frequency of the second set of SSB is set to a default center frequency or a first center frequency of the first set of SSB.

13. The method of claim 3, wherein if the second frequency offset is not provided or indicated, a frequency offset of the second set of SSB is set to a default frequency offset or a first frequency offset of the first set of SSB.

14. The method of any of claims 1 to 13, wherein the first set of SSB forms a first SSB burst (810, 1010, 1510, 1710, 2010), and the second set of SSB forms a second SSB burst (820, 1020, 1520, 2020);
wherein the first set of SSB comprises at least one of the following: a plurality of first type SSBs, or a plurality of second type SSBs, and the second set of SSB comprises the plurality of first type SSBs.

15. The method of any of claims 1 to 14, wherein at least one SSB of the first set of SSB has a quasi-co-location relationship with at least one SSB of the second set of SSB.

16. The method of claim 14, further comprising:
determining a first specific SSB belonging to the plurality of first SSBs; and
performing a first communication operation by using the first specific SSB during a first period (910, 1820, 1910, 1920, 1930, T0, T2, 2110).

17. The method of claim 16, further comprising:
determining a second specific SSB belonging to the plurality of second SSBs; and
performing a second communication operation by using the second specific SSB during a second period (920, 1810, 1830, T1, T3, 2120).

18. The method of claim 14, wherein the first information indicates a first bitmap of the first SSB burst (810, 1010, 1510, 1710, 2010), and the second information indicates a second bitmap of the second SSB burst (820, 1020, 1520, 2020).

19. The method of claim 14, further comprising:
monitoring the plurality of first type SSBs for at least one of PDCCH detection, BFD, BFR, or RLM.

20. The method of claim 19, further comprising:
monitoring the plurality of first type SSBs and/or the plurality of second type SSBs for at least one of synchronization, CSI measurement, or PDSCH reception.

21. The method of any of claims 1 to 20, further comprising:
receiving a first SSB indicator (SID1) for performing a first communication operation during a first period (810, 1010, 1510, 1710, 2010), wherein the first SSB indicator (SID1) is a downlink control information, DCI, signalling, a media access control-control element, MAC-CE, or a radio resource control, RRC, signalling;
wherein the first SSB indicator (SID1) is the first signaling for indicating the first information related to the first set of SSB.

22. The method of any of claims 1 to 21, further comprising at least one of following:
receiving a second SSB indicator (SID2) for stop performing the first communication operation during the first period (810, 1010, 1510, 1710, 2010), wherein the second SSB indicator (SID2) is a downlink control information, DCI, signalling, a media access control-control element, MAC-CE, or a radio resource control, RRC, signalling;
stop performing the first communication operation after a time duration, wherein the time duration may be preconfigured, fixed, configurable, or indicated by the first SSB indicator (SID1); or
stop performing the first communication operation after a number of the first SSB burst (810, 1010, 1510, 1710, 2010) has been received, wherein the number of the first SSB burst (810, 1010, 1510, 1710, 2010) may be preconfigured, fixed, configurable, or indicated by the first SSB indicator (SID1).

23. The method of claim 16, further comprising:
monitoring, during the first period (910, 1820, 1910, 1920, 1930, T0, T2, 2110), the plurality of first type SSBs and the plurality of second type SSBs indicated by the first bitmap for at least one of PDCCH detection and PDSCH reception.

24. A user equipment, UE, (600, 1610, 1620), **characterized in** comprising:
a transceiver (602); and
a processor (604), coupled to the transceiver (602) and configured to perform:
receiving (S710) a first signaling for indicating a first information related to a first set of Synchronization Signal/PBCH Block (SSB); and
receiving (S720) a second signaling for indicating a second information related to a second set of SSB.
